# EUROPEAN PATENT APPLICATION

(11) **EP 4 657 357 A1**
(43) Date of publication of application: **03.12.2025**
(21) Application number: 24178747.2
(22) Date of filing: 29.05.2024
(51) Int. Cl.: G06Q 50/02, A01G 23/00, G06V 20/10

(54) **METHOD FOR MEASURING AND ANALYZING A FOREST AREA FOR A FORESTRY VEHICLE**

(71) Applicant: Deere & Company, Moline, IL 61265 (US)
(72) Inventor: Hyvönen, Mika P., Mannheim (DE)
(74) Representative: Reichert, Christian

(57) **Abstract**

The invention is a method for measuring and analyzing a forest area for a forestry vehicle, the vehicle comprising a tree detection device, adapted to be mounted to the vehicle and to detect trees in the forest area, a computing device, adapted to receive a point cloud from the tree detection device and to receive GNSS data from the positioning device, the computing device adapted to analyze the point cloud data from the tree detection device by analyzing software, the computing device adapted to eliminate noise from the point cloud data, so that the computing device in a first step analyzes the point cloud data to detect individual trees and assigning object classification to each tree, and in a second step analyzes each channel data in the point cloud data to detect the diameter of the trees, in a further step analyzing the point cloud for each iteration and validation the tree position data and the tree diameter data using a software filter and a standard deviation of the measurement results, and if the filter results and the standard deviation converge to a predetermined value terminating the computing and recording the results as final, displaying the final data of the trees together with the final diameter on a display in the vehicle to an operator.

## Description

The present invention is a method to measure, evaluate and display current conditions in a forest area for a forestry vehicle, i.e. tree diameter and tree position in a forest work area.

Mobile work machines, in particular, forestry equipment and forestry machines, e.g. harvesters and forwarders, have an articulated boom and a tree stem processing tool at the tip of the boom. The tool can be e.g. a harvester head, a felling head, a harvesting and processing head, or a log grapple equipped with a sawing apparatus. The tool can be used e.g. to cut standing trees, to process felled trees or to grab objects, such as logs or tree stems. When using such a tool with power-driven operations, it is operated under the control of an operator of the work machine.

The mobile work machines comprise an articulated boom assembly with the tool attached to a boom tip of the boom assembly. Such tools handle heavy load, that may comprise a load of soil or logs or raw material. Usually, such booms are controlled by hydraulic actuators that are driven by hydraulic pressure from one or more pumps. The pumps are usually powered by the primary power source of the vehicle.

The stem processing tool or harvester tool comprises several movable knives that are used to grab the log/tree with the harvester tool. These knives are hydraulically actuated and controlled by the controller mounted on the harvester tool. Once the tree is grabbed with the harvester tool, a saw blade, usually at a bottom side of the harvester tool, is activated to cut the tree/stem. After the cutting process the tree will fall over, only being fixated in the harvester tool by the knives closed around the stem. Usually, within the harvester tool, feeding wheels are activated to pull/push the stem through the harvester tool and the knives, so that bark/branches are removed, and the log/stem is cut up into log pieces of determined size.

The forestry vehicle may be used for thinning operations in a certain forest area. One purpose of thinning is to reduce the number of trees that are near each other. The proximity may lead to reduced growth of the trees and thus less timber generation. The trees would stagnate in growth. Thinning is based on the basal area calculation of the trees, which is a function of the tree diameters in a height of 1,3 meters above the ground in a certain working area and the overall forest area, resulting in a number that gives an indication of the available timber at that time and about the current state of the standing trees, i.e. current growth state, tree health.

Thinning may depend on the age of the standing trees in the work area, the type or specimen of trees present and the current state of the trees, i.e. damages, pest infestations, fungi infestations, relative distances of the trees with each other, different growth rate of neighboring trees.

The operator may measure the tree basal area manually and calculate the basal area index. Based on the results, the operator may manually select trees based on experience, which requires knowledge of the specimens and the possible occurring circumstances, i.e. present infestations, damage, and judgment of distances of neighboring trees. Depending on the individual operator experience, the thinning results may differ.

The thinning operation is time consuming for the operator having to leave the vehicle and process manual measurement of the trees in various terrain and weather conditions. There are also intentions to facilitate tree density measurement by drones, or small flying aircraft devices. Yet, correct measurement is often not possible, due to the foliage of the trees, branches in the fly path, terrain obstacles and weather conditions.

A thinning or tree detection system requires automatic detection of the trees in the forest area or work area and a failure detection to avoid data error. The data should include a tree diameter and tree position.

CN103473070A describes a workflow-based forest stand operation process visualization simulating method, by taking a forest stand operation model as the leading, referring to a forest operation scheme, and combining forest stand operation practice to determine technological indexes of visualization of a forest stand operation measure.

CN109829372A describes a thinning strategy model that first acquires some perceptual information in the trees and the environment from the image data through the perceptual sub-model, and then inputs the data obtained from the perceptual sub-model into the decision sub-model. And the decision sub-model processes the perceptual information to obtain the thinning decision.

It is an object of the present invention to overcome these disadvantages.

The invention is a method for measuring and analyzing a forest area for a forestry vehicle, the vehicle comprising a tree detection device, adapted to be mounted to the vehicle and to detect trees in the forest area, a computing device, adapted to receive a point cloud from the tree detection device and to receive GNSS data from the positioning device, the computing device adapted to analyze the point cloud data from the tree detection device by analyzing software, the computing device adapted to eliminate noise from the point cloud data, so that the computing device in a first step analyzes the point cloud data to detect individual trees and assigning object classification to each tree, and in a second step analyzes each channel data in the point cloud data to detect the diameter of the trees in a further step analyzing the point cloud for each iteration and validation the tree position data and the tree diameter data using a software filter and a standard deviation of the measurement results, and if the filter results and the standard deviation converge to a predetermined value terminating the computing and recording the results as final, displaying the final data of the trees together with the final diameter on a display in the vehicle to an operator.

The tree detection device can be a Lidar device, recording different channels of the point cloud at a determined repetition frequency. For each repetition the analysis method is used and in case the resulting values converge, it is determined that the results are plausible and are displayed to the operator. The method enables the detection of trees and their diameter with a reduced failure rate and a distinguishing between foliage and tree trunks or stems in a forest working area. The operator is relieved from manual measurement or manual localization of the trees and the generated tree map could be shared between multiple receives, i.e. the production center or other forest vehicles. The method with the two-step analysis compares the filter result with the standard deviation result of the tree data. If a predetermined or selectable allowable difference is reached between these values, the method determines that the values are correct and saves these in the data base.

In a further embodiment the first step identifies for each point in the point cloud the adjacent points above, below and to each side in a two-dimensional arrangement, analyzing the distance of these adjacent points to the center point, wherein the distance is defined by a product of a scaling factor and the point distance from the tree detection device.

The method detects the tree as one object if the requirements are met. The point cloud is analyzed for every datapoint and its adjacent points to find single tree objects and to group these points as one tree. The distance or angle between the points and their normal vector can be selectable or predetermined by a product of the scaling factor and the distance to the measurement point or tree detection device.

In a further embodiment the first step further identifies the normal vectors of the adjacent point and the center point and compares their angle.

The angle is based on the diameter of the tree that is represented in the point cloud data. If the normal vector angle values are within a specified, preselected range, the method determines that the cloud points belong to the same object or tree.

In a further embodiment the center point and the adjacent point are identified as the same tree if the distance and the angle are in a specified range.

The method determines that if both the distance and the angle are within a specified range, the points belong to the same object or the same tree.

In a further embodiment in the second step, each channel data is analyzed by at least two circle algorithms to fit a tree diameter to the identified channel data, wherein the results of circle algorithms are compared and if the results are identical, the tree diameter together with the tree position is determined in the data base.

The circle algorithms in the method are compared and if the result in within a certain range, the detection is stopped, and the data is logged in the database for display to the operator.

In a further embodiment the circle algorithms include the Taubin method and the Hyper fit method.

The method uses the circle calculations to determine a tree diameter.

Another invention is a forestry vehicle, adapted to measure and analyze a forest area, comprising a tree detection device, adapted to be mounted to the vehicle and to detect trees in the forest area, a computing device, adapted to receive a point cloud from the tree detection device and to receive GNSS data from the positioning device, an operator display, the computing device adapted to analyze the point cloud data from the tree detection device by analyzing software, the computing device adapted to eliminate noise from the point cloud data, so that the computing device in a first step analyzes the point cloud data to detect individual trees and assigning object classification to each tree, and in a second step analyzes each channel data in the point cloud data to detect the diameter of the trees in a further step analyzing the point cloud for each iteration and validation the tree position data and the tree diameter data using a software filter and a standard deviation of the measurement results, and if the filter results and the standard deviation converge to a predetermined value terminating the computing and recording the results as final, displaying the final data of the trees together with the final diameter on a display in the vehicle to an operator.

The tree detection device can be a Lidar device, recording different channels of the point cloud at a determined repetition frequency. For each repetition the analysis method is used and in case the resulting values converge, it is determined that the results are plausible and are displayed to the operator. The method enables the detection of trees and their diameter with a reduced failure rate and a distinguishing between foliage and tree trunks or stems in a forest working area. The operator is relieved from manual measurement or manual localization of the trees and the generated tree map could be shared between multiple receives, i.e. the production center or other forest vehicles. The method with the two-step analysis compares the filter result with the standard deviation result of the tree data. If a predetermined or selectable allowable difference is reached between these values, the method determines that the values are correct and saves these in the data base.

Another invention is a system for a forestry vehicle, adapted to measure and analyze a forest area for a forestry vehicle, comprising a tree detection device, adapted to be mounted to the vehicle and to detect trees in the forest area, a computing device, adapted to receive a point cloud from the tree detection device and to receive GNSS data from the positioning device, the computing device adapted to analyze the point cloud data from the tree detection device by analyzing software, the computing device adapted to eliminate noise from the point cloud data, so that the computing device in a first step analyzes the point cloud data to detect individual trees and assigning object classification to each tree, and in a second step analyzes each channel data in the point cloud data to detect the diameter of the trees in a further step analyzing the point cloud for each iteration and validation the tree position data and the tree diameter data using a software filter and a standard deviation of the measurement results, and if the filter results and the standard deviation converge to a predetermined value terminating the computing and recording the results as final, displaying the final data of the trees together with the final diameter on a display in the vehicle to an operator.

The tree detection device can be a Lidar device, recording different channels of the point cloud at a determined repetition frequency. For each repetition the analysis method is used and in case the resulting values converge, it is determined that the results are plausible and are displayed to the operator. The method enables the detection of trees and their diameter with a reduced failure rate and a distinguishing between foliage and tree trunks or stems in a forest working area. The operator is relieved from manual measurement or manual localization of the trees and the generated tree map could be shared between multiple receives, i.e. the production center or other forest vehicles. The method with the two-step analysis compares the filter result with the standard deviation result of the tree data. If a predetermined or selectable allowable difference is reached between these values, the method determines that the values are correct and saves these in the data base.

The invention and its embodiments are further described in the following descriptions, whereas
Figure 1 depicts a forestry vehicle;
Figure 2 shows a harvester head for a forestry vehicle;
Figure 3 shows a detection map disclosing the tree position and diameter;
Figure 4 shows a point cloud data map as detected by the tree detection device.

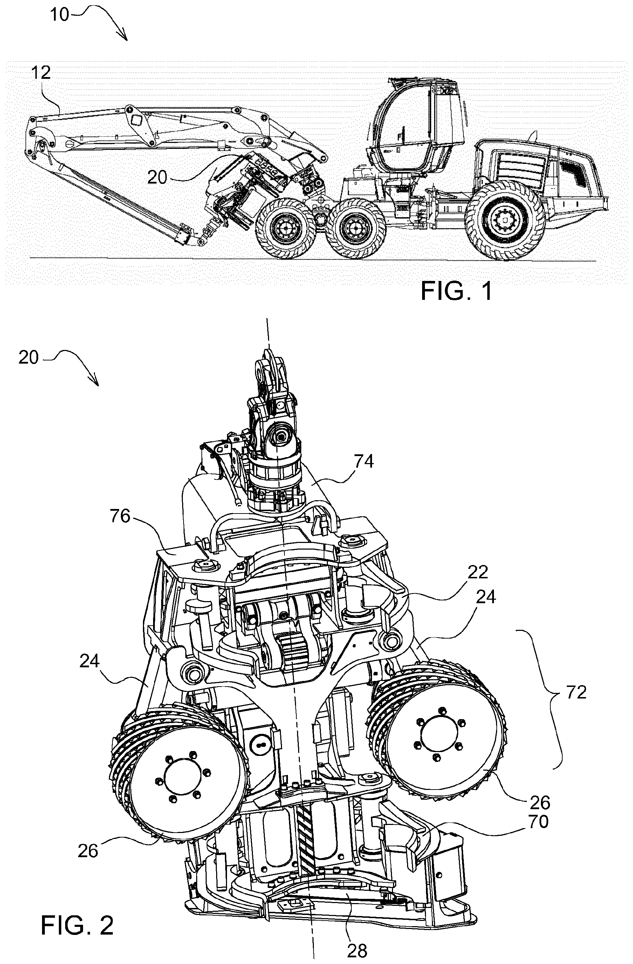

Figure 1 shows a forest harvester vehicle 10. It comprises usually of a front and rear chassis which are articulated and a driver cabin 30 for the operator. The vehicle 10 has boom assembly 12 to which a timber working device 20, e.g. a harvester head is attached. The boom assembly 12 is able to rotate and to tilt, and to extend and to rotate the timber working device 20 by the arrangement of the individual booms. For the felling and processing of a tree into logs, the operator extends and maneuvers the boom assembly 12 so that the harvester head 20 can close the upper and lower knives 22, 70 around the tree stem. The operator cuts the tree with the integrated saw blade 28 so that the stem falls over and is held at the lower end with the knives 22, 70 of the harvester head 20. In a next step the drive system 72, consisting of the feeding arms 24 holding the feeding wheels 26 is operated so that the feeding wheels 26 by their gripping surface pull or push the stem through the harvester head 20 from the upper 22 to the lower knives 70 so that the stem can be cut into logs of predetermined length, controlled by the drive system 72.

When the feeding wheels 26 transport the stem through the harvester head 20, the knives 22, 70 need to maintain a close grip to ensure the stem stays within operational parameters and is kept safely inside the harvester head 20. Also, the knives 22, 70 are used to remove branches and bark from the stem.

The shape of the stem is also an important factor in that a bend or curved shape will require a constant adaption of the grip of the knives 22, 70, leading to a longer processing time and reduced productivity. The grip may also damage the stem and reduce the wood quality.

The system comprises a tree detection device 40 that may be attached to an outside of the cabin 30 or on the vehicle 10. The tree detection device 40 can be a camera, a stereo camera or a lidar device. It is connected to a computing device 50 that may be used to give commands to the tree detection device 40, i.e. turning the device 40 or changing the settings or data feed or to compute the data feed. The tree detection device 40 is connected to a display unit 60 which receives the data feed. The computing device 50 is enabled to compute the data feed and use the method to detect a tree diameter and a tree position. The computing device 50 is connected to a display unit 60 inside the cabin 30 to display the information to the vehicle operator. The computing device 50 is identifying the trees and locates these into map that reflects the position of the tree and its diameter. The method updates with every working cycle, i.e. frequency so that the vehicle operator has no need to interfere with the display or to interact with the controls.

A harvester head 20 is shown in Figure 2. It comprises a base frame 76 which is extending along a feeding axis and a movably fixed tilt bracket 74 which is attachable to the boom assembly 12 of the vehicle 10. The frame 76 contains all necessary parts and devices to ensure the operation of the harvester head 20, such as controller, hydraulic hubs, hydraulic lines, hydraulic motors, and hydraulic valves. It further comprises movable arms 24 rotatably holding the feeding wheels 26 so that these can be pushed against the stem surface. In a vertical direction, above the feeding wheels 26 are the upper knives 22 and below are the lower knives 70 which are controlled by hydraulic actuators usually but may also be controlled by electric actuators or motors. At the bottom of the frame 76 the saw blade 28 is placed below the lower knives 70.

During cutting operation, the upper and lower knives 22, 70 are closed around the stem. The harvester head 20 may only have upper 22 or lower knives 70, this does not change the operation procedure. Further, the harvester head 20 may have more than two feeding wheels 26, such as four, which also does not alter the process or use of this invention.

Upon felling of a tree, the method will automatically detect the felling operation, which can be detected by the harvester head 20 turning in a horizontal or upside-down position. When the felling is recorded, the method and the computing unit 60 updates the grid and square according to the vehicle position and reduces the number of recorded trees.

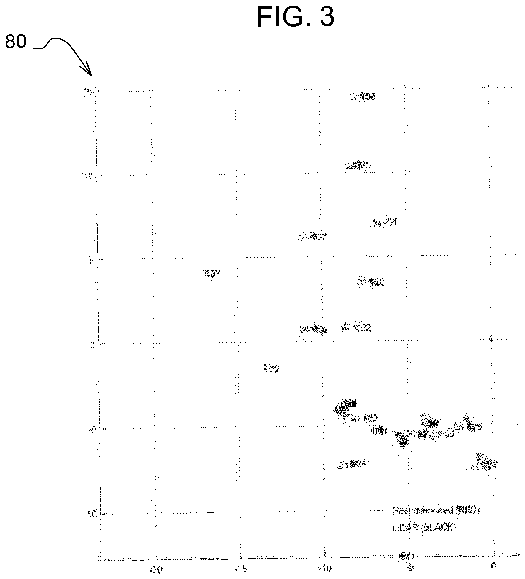

Figure 3 depicts a model map that is generated with the method. The tree positions are shown on a grid or a scaled map. The grid may be setup in meters. The tree position is shown relative to the vehicle position in left right orientation and the radial distance in meters.

The tree position is shown as a mark which can be a circle, diamond or square. Depending on the size or diameter of the tree the symbol can be in a particular color, this can also depend on the tree type for better orientation of the operator. Together with the mark the tree diameter is displayed. The unit can be centimeters, inch, meter or feet. The map can also depict the size or height in any preselected unit. The operator can thus easily decide which trees are selected for the intended wood quality or size. The map and the computing device 50 can also calculate and display the current local tree density.

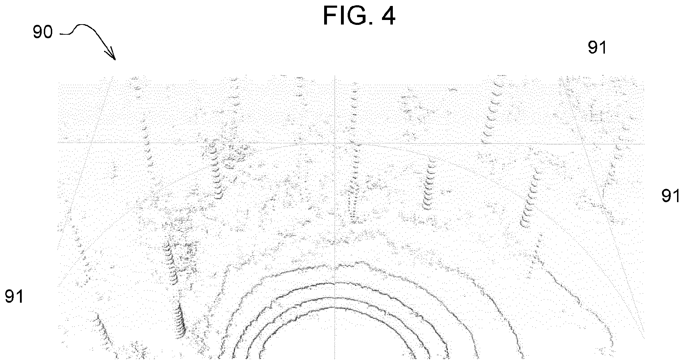

Figure 4 shows a point cloud map 90 that is generated by the tree detection device 40. Each sweep or frequency generates a point cloud in a radial distance to the tree detection device 40. Visualized the point cloud map 90 contains reflection points 91 from tree trunks. These particular points are analyzed by the computing device 50.

The point cloud map 90 may consist of concentric rings to detect the surrounding environment. The horizontal resolution can be in the range of 0.2 degrees with a rotation frequency of 20 Hertz. The method is used to find the position and diameter of the tree from each single frame of the tree detection device 50. The method may use a Kalman filter to evaluate the measurement results. The method results in a list or matrix of the tree position and tree diameter removing the need to save the complete point cloud data but only to save the calculation results.

The detection of tree object is facilitated by using cut data sets by comparing every point in the point cloud with the neighboring 4 points to the left, right, up and down. The object detection is based on the distance of these points and by comparison of their normal vectors evaluating their angular differences. As a condition two neighboring points need to be closer to each other than a distance defined by product of a scaling factor and the points' distance from the sensor. Also, the normal vectors range needs to be in a defined range. With this evaluation all identified point are defined as to belong to the same tree object. The objects are identified in a classification index in a matrix form. Object which are not classified as trees have also less points that are classified to belong to that object and are thus classified as not being tree objects.

For each sweep two different algorithms Taubin fit and Hyper fir are used to identify the trees and diameters of the tree classified objects. The result is compared and if both results match, i.e the tree is at the same location and has the same diameter the final tree position and diameter list is created, and the sweep is repeated.

The list is updated according to the next sweep results using a Kalman Filter using the position of the trees and their diameter and their changes with each sweep. If the mean deviation of the same tree object reaches a certain limit or is not receiving any changes, a final tree object list is saved and further displayed to the operator, resulting in less data handling, and saving for the final object list and a reduced failure containing final result.

## Claims

1. Method for measuring and analyzing a forest area for a forestry vehicle,
the vehicle comprising a tree detection device, adapted to be mounted to the vehicle and to detect trees in the forest area,
a computing device, adapted to receive a point cloud from the tree detection device and to receive GNSS data from the positioning device,
the computing device adapted to analyze the point cloud data from the tree detection device by analyzing software,
the computing device adapted to eliminate noise from the point cloud data,
so that the computing device in a first step analyzes the point cloud data to detect individual trees and assigning object classification to each tree,
and in a second step analyzes each channel data in the point cloud data to detect the diameter of the trees
in a further step analyzing the point cloud for each iteration and validation the tree position data and the tree diameter data using a software filter and a standard deviation of the measurement results,
and if the filter results and the standard deviation converge to a predetermined value terminating the computing and recording the results as final,
displaying the final data of the trees together with the final diameter on a display in the vehicle to an operator.

2. Method of claim 1, wherein the first step identifies for each point in the point cloud the adjacent points above, below and to each side in a two dimensional arrangement, analyzing the distance of these adjacent points to the center point, wherein the distance is defined by a product of a scaling factor and the point distance from the tree detection device.

3. Method of claim 2, wherein the first step further identifies the normal vectors of the adjacent point and the center point and compares their angle.

4. Method of claim 3, wherein the center point and the adjacent point are identified as the same tree if the distance and the angle are in a specified range.

5. Method of claim 4, wherein in the second step, each channel data is analyzed by at least two circle algorithms to fit a tree diameter to the identified channel data, wherein the results of circle algorithms are compared and if the results are identical, the tree diameter together with the tree position is determined in the data base.

6. Method of claim 5, wherein the circle algorithms include the Taubin method and the Hyper fit method.

7. Forestry vehicle, adapted to measure and analyze a forest area, comprising
a tree detection device, adapted to be mounted to the vehicle and to detect trees in the forest area,
a computing device, adapted to receive a point cloud from the tree detection device and to receive GNSS data from the positioning device,
an operator display,
the computing device adapted to analyze the point cloud data from the tree detection device by analyzing software,
the computing device adapted to eliminate noise from the point cloud data,
so that the computing device in a first step analyzes the point cloud data to detect individual trees and assigning object classification to each tree,
and in a second step analyzes each channel data in the point cloud data to detect the diameter of the trees
in a further step analyzing the point cloud for each iteration and validation the tree position data and the tree diameter data using a software filter and a standard deviation of the measurement results,
and if the filter results and the standard deviation converge to a predetermined value terminating the computing and recording the results as final,
displaying the final data of the trees together with the final diameter on a display in the vehicle to an operator.

8. System for a forestry vehicle, adapted to measure and analyze a forest area for a forestry vehicle, comprising
a tree detection device, adapted to be mounted to the vehicle and to detect trees in the forest area,
a computing device, adapted to receive a point cloud from the tree detection device and to receive GNSS data from the positioning device,
the computing device adapted to analyze the point cloud data from the tree detection device by analyzing software,
the computing device adapted to eliminate noise from the point cloud data,
so that the computing device in a first step analyzes the point cloud data to detect individual trees and assigning object classification to each tree,
and in a second step analyzes each channel data in the point cloud data to detect the diameter of the trees
in a further step analyzing the point cloud for each iteration and validation the tree position data and the tree diameter data using a software filter and a standard deviation of the measurement results,
and if the filter results and the standard deviation converge to a predetermined value terminating the computing and recording the results as final,
displaying the final data of the trees together with the final diameter on a display in the vehicle to an operator.
